# EUROPÄISCHE PATENTSCHRIFT

(11) **EP 1 295 524 B1**
(45) Veröffentlichungstag und Bekanntmachung des Hinweises auf die Patenterteilung: **10.05.2006**
(21) Anmeldenummer: 02019678.8
(22) Anmeldetag: 04.09.2002
(51) Int. Cl.: A01F 12/40

(54) **Befestigungsanordnung zur Befestigung von Schlägeln an einem Rotor eines Strohhäckslers**
Fixing arrangement for the flails on a rotor of a straw chopper
Système de fixation pour les lames frappeuses sur un rotor d'un hache-paille

(30) Priorität: 22.09.2001 DE 10146773
(43) Veröffentlichungstag der Anmeldung: 26.03.2003
(73) Patentinhaber: DEERE & COMPANY, Moline, Illinois 61265-8098 (US)
(72) Erfinder: Büermann, Martin, 89437 Haunsheim (DE); Weichholdt, Dirk, 57200 Sarreguemines (FR)
(74) Vertreter: Holst, Sönke

(56) Entgegenhaltungen:
- DE-A- 3 631 485
- FR-A- 2 479 646
- US-A- 3 292 353
- US-A- 3 465 507
- US-A- 4 211 060
- US-A- 4 922 698

## Beschreibung

Die Erfindung betrifft eine Befestigungsanordnung zur Befestigung von Schlägeln an einem Rotor eines Strohhäckslers, mit einem Bolzen, der in ein Loch in den Schlägeln und ein Loch in einer mit dem Rotor verbundenen Konsole einführbar ist und endseitig mit einem den Bolzen in den Löchern halternden, lösbaren Verriegelungselement verbindbar ist.

Bei heute verwendeten Anbaustrohhäckslern (s. DE 36 31 485 C) werden die Häckslerschlägel mit Schrauben und Stoppmuttern drehbar an Konsolen festgelegt, die ihrerseits auf dem Häckslerrotor festgeschweißt sind. Um eine bestimmte Häckselqualität zu erreichen und den Leistungsbedarf des Häckslers in Grenzen zu halten, werden die Schlägel, die beidseitig angeschliffen sind, nach ca. 100 bis 200 Betriebsstunden ausgebaut und gedreht angebaut. Nach dieser Zeit ist die Klinge in der Regel stumpf, so dass die Schnittlänge größer wird und der Leistungsbedarf erheblich ansteigt. Nach weiteren 100 bis 200 Betriebsstunden werden die alten Schlägel gegen neue Schlägel ausgetauscht.

Der Nachteil der Befestigung mit Schraube und Stoppmutter liegt in dem hohen Zeitbedarf, der für den Wechsel bzw. für das Umdrehen der Schlägel benötigt wird. Als Richtwert gelten hierfür ca. 4 Stunden für einen kompletten Austausch bei einem Mähdrescher mit sechs Schüttlern.

Die der Erfindung zugrunde liegende Aufgabe wird darin gesehen, eine verbesserte Befestigungsanordnung für Schlägel an einem Häckslerrotor bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.
Wenn die Befestigungsanordnung montiert ist, verbringt eine Feder das Verriegelungselement in eine Arretierstellung, in der es nicht lösbar ist. In dieser Stellung erfolgt der normale Betrieb des Strohhäckslers. Das Verriegelungselement kann durch Anwendung einer äußeren Kraft in eine Lösestellung verbracht werden, in der es vom Bolzen lösbar bzw. an ihm befestigbar ist. Nach dem Abnehmen des Verriegelungselements sind die Schlägel schnell und unproblematisch wechsel- bzw. umdrehbar.

Auf diese Weise erreicht man, dass die Feder das Arretierungselement während des normalen Betriebs sicher arretiert. Zum Umdrehen oder Wechsel der Schlägel wird das Verriegelungselement auf einfache Weise aus der Arretier- in die Lösestellung verbracht, in der das Verriegelungselement abnehmbar ist. Der Bolzen wird entnommen und die Schlägel können gewechselt oder gedreht werden. Anschließend wird die Befestigungsanordnung in umgekehrter Reihenfolge wieder angebracht. Dieser Vorgang erfordert wesentlich weniger Zeit als das Lösen und Festziehen der bekannten Schraubverbindungen.

Vorzugsweise spannt die Feder den Bolzen in axialer Richtung vor, d. h. sie beaufschlagt ihn mit einer Kraft, die sein aus den Löchern herausragendes Ende in die Löcher hineinzuziehen bestrebt ist. Durch (manuelles oder durch ein Werkzeug bewerkstelligtes) Bewegen des Bolzens entgegen die Federkraft kann das Verriegelungselement zwischen Arretierungs- und Löseposition bewegt werden. Bei einer derartigen Ausführungsform kann eine Teller- oder Schraubenfeder Verwendung finden, die in der Regel an der dem Schaft benachbarten Innenseite eines überstehenden Kopfes des Bolzens anliegt. Denkbar wäre aber auch, dass die Feder nicht auf den Bolzen, sondern mittelbar oder unmittelbar auf das Arretierungselement wirkt und es in die Arretierstellung vorspannt. Weiterhin könnte die Feder auch eine Torsionsfeder sein, die den Bolzen und/oder das Arretierelement rotativ in die Arretierstellung vorspannt.

Bezüglich der Anbringung des Arretierelements am Bolzen bestehen verschiedene Möglichkeiten. Einerseits kann das Verriegelungselement in radialer Richtung auf den Bolzen aufsetzbar sein. Die Befestigungsanordnung wird somit in die Löseposition verbracht und dann wird das Verriegelungselement einfach radial auf den Bolzen aufgesetzt oder aufgeschoben bzw. abgenommen. Dieser Vorgang kann ohne großen Zeitaufwand erfolgen.

Als Verriegelungselement kommt insbesondere ein zylindrischer Verriegelungsstift in Frage, der in eine passende Öffnung des Bolzens eingeschoben wird. Er kann an seinen beiden Enden über den Bolzen hinausragen und ihn somit arretieren. Anstelle eines Stifts wäre auch die Verwendung eines Sprengrings denkbar, der in eine Nut des Bolzens eingesetzt wird.

In der Arretierposition erweist es sich als angebracht, den axialen Bewegungsbereich des Verriegelungsstifts (oder des Sprengrings) zu begrenzen, damit er sich nicht in unerwünschter Weise vom Bolzen löst. Dazu kommt beispielsweise der Rand einer Ausnehmung in einem Element - beispielsweise einer Buchse - in Frage, an der der Verriegelungsstift anliegt.

Andererseits kann eine Art Bajonettbefestigung für die Schlägel des Strohhäckslers verwendet werden, bei der das Verriegelungselement ein fest oder insbesondere zu Reparaturzwecken abnehmbar mit dem Bolzen verbundenes Element ist, welches nur in der Lösestellung durch eine Drehung des Bolzens lösbar und verriegelbar ist. In der Arretierstellung liegt das Element an einem Gegenlager an. In der Arretierstellung ist der Bolzen weiterhin zweckmäßigerweise gegenüber einer Drehung relativ zu dem Gegenlager gesichert, so dass ein unerwünschtes Lösen nicht zu befürchten ist.

Im Einzelnen kann das mit dem Bolzen verbundene Element ein sich quer zur Längsachse des Bolzens erstreckender Verriegelungsstift sein, der in einer ersten Drehstellung des Bolzens durch die Löcher und eine erste Nut einer Ausnehmung in seinem Gegenlager steckbar ist. In einer zweiten Drehstellung des Bolzens ist der Verriegelungsstift in einer zweiten Nut des Gegenlagers arretiert. Um den Bolzen zwischen der ersten und zweiten Drehstellung bewegen zu können, muss er sich in der Lösestellung befinden; in der Arretierstellung ist keine Rotation möglich. Das Gegenlager ist vorzugsweise in einer Buchse angeordnet, die in einem Schlägel gelagert ist.

In den Zeichnungen sind zwei nachfolgend näher beschriebene Ausführungsbeispiele der Erfindung dargestellt. Es zeigt:
- Fig. 1: eine Erntemaschine mit einem Strohhäcksler;
- Fig. 2: eine perspektivische Explosionszeichnung einer ersten Ausführungsform einer Befestigungsanordnung der Schlägel des Strohhäckslers, und
- Fig. 3: eine perspektivische Explosionszeichnung einer zweiten Ausführungsform einer Befestigungsanordnung der Schlägel des Strohhäckslers.

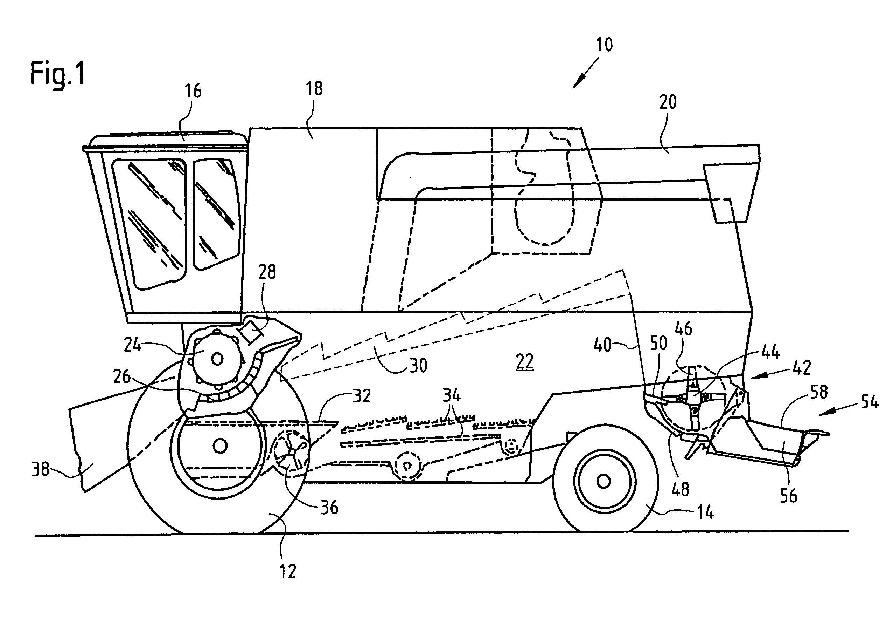

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 über ein Strohleitblech 40 einem Strohhäcksler 42 zugeführt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist.

Der Strohhäcksler 42 umfasst einen hohlzylindrischen Rotor 44 mit um seinen Umfang und über seine Länge verteilten, pendelnd aufgehängten Schlägeln 46, der mit einem Antrieb derart verbunden ist, dass er in einem Gehäuse 48 um eine etwa horizontale, quer zur Fahrtrichtung verlaufende Achse rotiert. Im Zusammenwirken mit Gegenmessern 50 werden die ausgedroschenen, großen Erntegutteile zu Häckselgut zerkleinert. An der Rückseite des Strohhäckslers 42 ist eine Verteileinrichtung 54 angeordnet, die eine Anzahl seitlich nebeneinander angeordneter Leiteinrichtungen 56 in Form von Strohleitblechen umfasst, welche unterhalb einer Strohverteilerhaube 58 angeordnet sind.

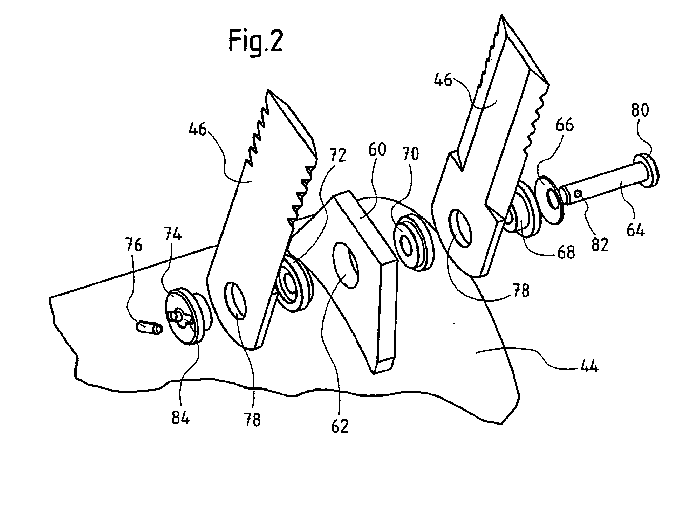

Die vorliegende Erfindung bezieht sich auf die Befestigungsanordnung für die Schlägel 46 am Rotor 44. In Figur 2 ist eine erste Ausführungsform einer derartigen Befestigungsanordnung in Explosionsdarstellung wiedergegeben. Die an ihren Längsseiten und vorzugsweise an den äußeren Enden mit Schneidkanten ausgestatteten Schlägel 46 sind paarweise an einer am Rotor 44 angeschweißten oder auf andere Weise befestigten Konsole 60 befestigt, wobei sich je ein Schlägel 46 auf jeder Seite der Konsole 60 befindet. Die Konsole 60 erstreckt sich in Drehrichtung des Rotors 44. Die Konsole 60 ist mit einem sich in Achsrichtung des Rotors 44 erstreckenden Loch 62 versehen. Zur Befestigung der Schlägel 46 dienen ein Bolzen 64, eine Tellerfeder 66, Buchsen 68, 70, 72 und 74, sowie ein Verschlussstift 76. Die Buchsen 68, 70 und 72 sowie die Schlägel 46 und der Rotor 44 mit der Konsole 60 sind Elemente, die auch bei konventionellen Strohhäckslern 42 verwendet werden. Sie sind daher preisgünstig verfügbar. Die äußeren Buchsen 68 und 74 erstrecken sich im montierten Zustand in die Löcher 78 der Schlägel 46 und die inneren Buchsen in das Loch 62 der Konsole 60. Der Bolzen 64 wird nacheinander durch die mittige Öffnung der Tellerfeder 66, die mittige Öffnung der ersten Buchse 68, ein Loch 78 im ersten Schlägel 46, eine mittige Öffnung in der zweiten Buchse 70, das Loch 62 in der Konsole 60, eine mittige Öffnung in der dritten Buchse 72, ein Loch 78 im zweiten Schlägel 46 und schließlich durch eine entsprechende Öffnung in der vierten Buchse 74 gesteckt. Im zusammengebauten Zustand erstreckt sich der Bolzen 64 durch die genannten Elemente, wobei sein der Tellerfeder 66 benachbarter, über seinen Schaft überstehender Kopf 80 verhindert, dass er durch die Öffnung der Tellerfeder 66 hindurchrutscht. Der Kopf 80 hält den Bolzen 64 somit an der Tellerfeder 66 in Anlage, die wiederum an der ersten Buchse 68 anliegt. An seinem gegenüberliegenden Ende wird der Bolzen 64 durch den als Verriegelungselement dienenden Verschlussstift 76 gehalten, der eine sich radial zum Bolzen 64 erstreckende Öffnung 82 durchdringt, die an dem vom Kopf 80 beabstandeten Ende des Bolzens 64 vorgesehen ist. Durch den an der äußeren Oberfläche der vierten Buchse 74 anliegenden, über die Öffnung 82 hinausragenden Teil des Verschlussstifts 76 ist der Bolzen 64 in seiner axialen Richtung an der vierten Buchse 74 arretiert und hält den gesamten beschriebenen Zusammenbau zusammen.

Um zu verhindern, dass sich der Verriegelungsstift 76 aus der Öffnung 82 löst, insbesondere herausrutscht, ist in der vierten Buchse 74 eine sich radial erstreckende Ausnehmung 84 mit etwa rechteckigem Querschnitt vorgesehen, die geringfügig länger ist als der Verriegelungsstift 76 und deren Breite und Tiefe etwas größer als der Durchmesser des Verriegelungsstifts 76 sind. Der Rand der Ausnehmung 84 begrenzt somit den Bereich, über den sich der Verriegelungsstift 76 in der Ausnehmung 84 axial verschieben kann. Die Ausnehmung 84 könnte daher auch kreisförmig sein, weil die azimutale Ausrichtung des Verriegelungsstifts 76 nicht von Bedeutung ist. Da der Bolzen 64 und die übrigen Elemente zur Befestigung der Schlägel 46 derart bemessen sind, dass die Tellerfeder 66 gespannt ist, wenn die Öffnung 82 in Achsrichtung des Bolzens 64 über den Rand der Ausnehmung 84 herausragt, hält die Tellerfeder 66 durch ihre Federkraft die Öffnung 82 und somit den Verriegelungsstift 76 innerhalb der Ausnehmung 84.

Zum Zusammenbau der Befestigungsanordnung der Schlägel 46 werden die Schlägel 46 mit den Buchsen 68, 70, 72 und 74 neben dem Loch 62 positioniert. Dann wird der Bolzen 64 mit der aufgesteckten Tellerfeder 66 durch die miteinander ausgerichteten Löcher gesteckt. Durch eine geeignete Zange, beispielsweise eine Gripzange, die einerseits am Kopf 80 des Bolzens 64 und andererseits an der vierten Buchse 74 angreift, wird die Tellerfeder 66 gespannt, so dass der Bolzen 80 in eine Position verschoben werden kann, in der die Öffnung 82 über die vierte Buchse 74 hinausragt. Nach dem - erst durch das Spannen der Tellerfeder 66 möglichen - Einsetzen des Verriegelungsstifts 76 in die Öffnung 82 wird die Zange abgenommen und die Tellerfeder 66 entspannt, so dass sie den Verriegelungsstift 76 in die Ausnehmung 84 zieht, in der er arretiert ist und seinerseits die Befestigungsanordnung fixiert. Der Federweg der Tellerfeder 66 ist vorzugsweise so klein, dass bei einem Kippen der Messer (in Figur 1 nach links bzw. rechts) keine Berührung mit den Gegenmessern 50 erfolgen kann. In einer weiteren Ausbildung können der Kopf 80 des Bolzens 64 und die vierte Buchse 74 außen entsprechende Abflachungen oder einen Sechskant aufweisen, der sich in der Spannvorrichtung (Zange o. ä.) wiederfindet, so dass die Öffnung 82 und die Ausnehmung 84 in einer Flucht liegen, was die Montage vereinfacht. Die Demontage erfolgt in umgekehrter Weise.

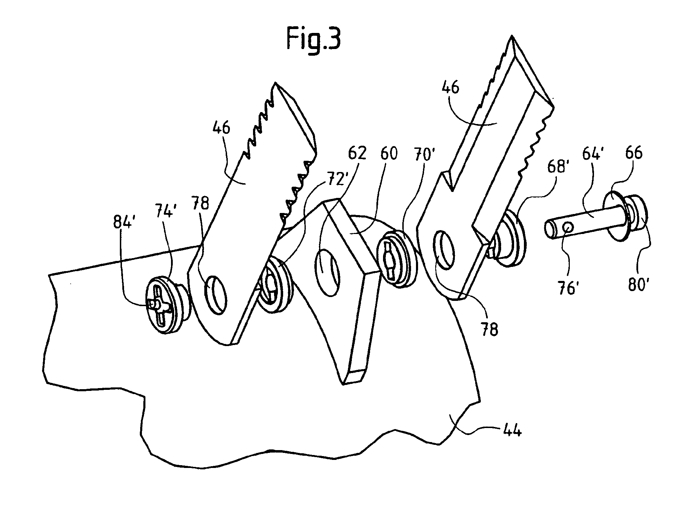

Die Figur 3 zeigt eine zweite Ausführungsform einer erfindungsgemäßen Befestigungsanordnung, wobei der ersten Ausführungsform entsprechende Elemente mit übereinstimmenden Bezugszeichen versehen sind, während abweichende Elemente mit einem Apostroph versehen wurden.

Im Unterschied zur ersten Ausführungsform ist in der zweiten Ausführungsform der Verriegelungsstift 76' fest mit dem Bolzen 64' verbunden. Der Verriegelungsstift 76' ist beispielsweise als Spannstift oder Passstift mit Presspassung ausgeführt. Er könnte auch am Bolzen 64' angeschweißt, angeklebt oder angelötet sein. Außerdem ist die vierte Buchse 74' mit einer kreuzförmigen Ausnehmung 84' ausgestattet, die eine erste, durch die Buchse 74' hindurch gehende Nut und eine dazu um 90 Grad versetzte, zweite Nut umfasst, die jedoch als Vertiefung ausgebildet ist, wie in der ersten Ausführungsform. Der Verriegelungsstift 76' verhindert, dass die Tellerfeder 66 verloren geht. In dieser Ausführungsform müssen alle weiteren Buchsen 68', 70' und 72' mit einem der ersten Nut entsprechenden Schlitz oder einer Bohrung versehen sein, so dass der Bolzen 64' mit dem Verriegelungsstift 76' hindurch gesteckt werden kann. Der Kopf 80' des Bolzens 64' ist vorzugsweise mit einem Innen- (oder Außen-) Sechskant oder anderen Ausformungen versehen, um ihn mit einem entsprechenden Schlüssel drehen zu können.

Zur Montage der Befestigungsanordnung werden die Schlägel 46 und die Buchsen 68', 70', 72' und 74' mit dem Loch 62 in der Konsole 66 in Ausrichtung gebracht. Nach dem Einfügen des Bolzens 64', wobei der Verriegelungsstift 76' durch die Nuten in den Buchsen 68', 70', 72' und 74' hindurchgeführt wird, werden der Kopf 80' des Bolzens 64' und die vierte Buchse 74' mit einem geeigneten Werkzeug verspannt, so dass die Tellerfeder 66 zusammengedrückt wird. Der Bolzen 64' und/oder die vierte Buchse 74' wird mit einem entsprechenden Werkzeug um 90 Grad gedreht und das Spannwerkzeug gelöst. Der Verriegelungsstift 76' kommt somit in der zweiten, nicht durchgehenden Nut der Ausnehmung 84' der vierten Buchse 74' zum Anliegen und arretiert die Befestigungsanordnung. Als Verriegelungselement dient hier der Verriegelungsstift 76' im Zusammenwirken mit der vierten Buchse 74'. Auch hier erfolgt die Demontage in umgekehrter Reihenfolge.

Anzumerken ist, dass es bei beiden Ausführungsformen denkbar wäre, die Tellerfeder 66 an einer beliebigen anderen Stelle anzubringen, in der sie den Verriegelungsstift 76 oder 76' in die Ausnehmung 84 bzw. 84' drückt. Sie könnte zwischen der zweiten Buchse 70 bzw. 70' und der Konsole 60 (dann wirkt sie mittelbar auf den Bolzen 64, 64') oder zwischen der Konsole 60 und der dritten Buchse 72 bzw. 72' angeordnet sein (dann wirkt sie auf die vierte Buchse 74, 74'). Auch könnte sie - ggf. unter Verwendung geeigneter Unterlegscheiben - zwischen der vierten Buchse 74, 74' und dem links eingezeichneten Schlägel 46 positioniert sein. An allen diesen Stellen wirkt sie mittelbar auf den Bolzen 64, 64' und/oder die vierte Buchse 74, 74' ein und drückt den Verriegelungsstift in seine Arretierposition in der Ausnehmung 84, 84'.

## Patentansprüche

1. Befestigungsanordnung zur Befestigung von Schlägeln (46) an einem Rotor (44) eines Strohhäckslers (42), mit einem Bolzen (64, 64'), der in ein Loch (78) in den Schlägeln (46) und ein Loch (62) in einer mit dem Rotor (44) verbundenen Konsole (60) einführbar ist und endseitig mit einem den Bolzen (64, 64') in den Löchern (62, 78) halternden, lösbaren Verriegelungselement verbindbar ist, **dadurch gekennzeichnet, dass** das Verriegelungselement im montierten Zustand durch eine Feder in eine Arretierstellung verbracht wird, in der es vom Bolzen (64, 64') nicht lösbar ist und dass das Verriegelungselement gegen die Kraft der Feder in eine Lösestellung verbringbar ist, in der es vom Bolzen (64, 64') lösbar und an ihm befestigbar ist.

2. Befestigungsanordnung nach Anspruch 1, **dadurch gekennzeichnet, dass** die Feder den Bolzen (64, 64') axial vorspannt.

3. Befestigungsanordnung nach Anspruch 2, **dadurch gekennzeichnet, dass** die Feder eine Tellerfeder (66) oder eine Schraubenfeder ist.

4. Befestigungsanordnung nach Anspruch 2 oder 3, **dadurch gekennzeichnet, dass** die Feder an der Innenseite eines Kopfes (80, 80') des Bolzens anliegt.

5. Befestigungsanordnung nach einem der Ansprüche 1 bis 5, **dadurch gekennzeichnet, dass** das Verriegelungselement in radialer Richtung auf den Bolzen (64) aufsetzbar ist.

6. Befestigungsanordnung nach Anspruch 5, **dadurch gekennzeichnet, dass** das Verriegelungselement ein lösbarer Verriegelungsstift (76) ist, der durch eine passende Öffnung (82) im Bolzen (64) steckbar ist.

7. Befestigungsanordnung nach Anspruch 5 oder 6, **dadurch gekennzeichnet, dass** der axiale Bewegungsbereich des Verriegelungselements im montierten Zustand begrenzt ist.

8. Befestigungsanordnung nach Anspruch 7, **dadurch gekennzeichnet, dass** der axiale Bewegungsbereich des Verriegelungselements durch den Rand einer Ausnehmung (84) in einem Element, insbesondere einer Buchse (74), an dem das Verriegelungselement (76) anliegt, begrenzt ist.

9. Befestigungsanordnung nach einem der Ansprüche 1 bis 4, **dadurch gekennzeichnet, dass** das Verriegelungselement ein mit dem Bolzen (64') verbundenes Element umfasst, das in der Lösestellung durch eine Drehung des Bolzens (64') lösbar bzw. verriegelbar ist.

10. Befestigungsanordnung nach Anspruch 9, **dadurch gekennzeichnet, dass** mit dem Bolzen (64') verbundene Element ein Verriegelungsstift (76') ist, der in einer ersten Drehstellung des Bolzens durch die Löcher (62, 78) und eine erste Nut in einer Ausnehmung (84') steckbar ist und in einer gegenüber der ersten Drehstellung gedrehten, zweiten Drehstellung des Bolzens in einer zweiten Nut in der Ausnehmung (84') arretiert ist.

11. Häckselrotor (44) für einen Strohhäcksler (42), mit einem Rotor (44) und Schlägeln (46), die mittels einer Befestigungseinrichtung nach einem der vorhergehenden Ansprüche am Rotor (44) befestigt sind.

## Claims

1. Fixing arrangement for fixing the flails (46) on a rotor (44) of a straw chopper (42), having a bolt (64, 64') which can be introduced into a hole (78) in the flails (46) and into a hole (62) in a bracket (60) which is connected to the rotor (44), and can be connected on the end side to a detachable locking element which retains the bolt (64, 64') in the holes (62, 78), **characterised in that** the locking element in the mounted state is brought by a spring into a locked position in which it cannot be detached from the bolt (64, 64') and **in that** the locking element can be brought in opposition to the force of the spring into a detaching position in which it can be detached from the bolt (64, 64') and can be fixed thereon.

2. Fixing arrangement according to claim 1, **characterised in that** the spring prestresses the bolt (64, 64') axially.

3. Fixing arrangement according to claim 2, **characterised in that** the spring is a disc spring (66) or a helical spring.

4. Fixing arrangement according to claim 2 or 3, **characterised in that** the spring abuts on the inner side of a head (80, 80') of the bolt.

5. Fixing arrangement according to one of the claims 1 to 5, **characterised in that** the locking element can be placed on the bolt (64) in a radial direction.

6. Fixing arrangement according to claim 5, **characterised in that** the locking element is a detachable locking pin (76) which can be inserted through a suitable opening (82) in the bolt (64).

7. Fixing arrangement according to claim 5 or 6, **characterised in that** the axial movement range of the locking element in the mounted state is limited.

8. Fixing arrangement according to claim 7, **characterised in that** the axial movement range of the locking element is limited by the edge of a recess (84) in an element, in particular a bush (74), on which the locking element (76) abuts.

9. Fixing arrangement according to one of the claims 1 to 4, **characterised in that** the locking element comprises an element which is connected to the bolt (64') and, in the detaching position, can be detached or locked by rotating the bolt (64').

10. Fixing arrangement according to claim 9, **characterised in that** the element connected to the bolt (64') is a locking pin (76') which can be inserted in a first rotational position of the bolt through the holes (62, 78) and a first groove in a recess (84'), and in a second rotational position of the bolt, rotated relative to the first rotational position, is locked in a second groove in the recess (84').

11. Chopping rotor (44) for a straw chopper (42) having a rotor (44) and flails (46) which are fixed on the rotor (44) by means of a fixing device according to one of the preceding claims.

## Revendications

1. Système de fixation destiné à fixer des lames batteuses (46) sur un rotor (44) d'un hache-paille (42), comportant un boulon (64, 64') qui est propre à être introduit dans un trou (78) ménagé dans les lames batteuses (46) et dans un trou (62) ménagé dans une console (60) assemblée au rotor (44), et qui est propre à être assemblé sur une extrémité avec un élément de verrouillage amovible retenant le boulon (64, 64') dans les trous (62, 78), **caractérisé en ce que** l'élément de verrouillage, en position montée, est amené par un ressort dans une position d'immobilisation dans laquelle ledit élément ne peut être désolidarisé du boulon (64, 64') et **en ce que** l'élément de verrouillage peut être amené à l'encontre de la force du ressort dans une position de déblocage, dans laquelle il peut être désolidarisé du boulon (64, 64') et être fixé à celui-ci.

2. Système de fixation selon la revendication 1, **caractérisé en ce que** le ressort précontraint le boulon (64, 64') dans le sens axial.

3. Système de fixation selon la revendication 2, **caractérisé en ce que** le ressort est un ressort Belleville (66) ou un ressort hélicoïdal.

4. Système de fixation selon la revendication 2 ou 3, **caractérisé en ce que** le ressort est en appui sur la face intérieure d'une tête (80, 80') du boulon.

5. Système de fixation selon l'une quelconque des revendications 1 à 5, **caractérisé en ce que** l'élément de verrouillage peut être monté suivant une direction radiale sur le boulon (64).

6. Système de fixation selon la revendication 5, **caractérisé en ce que** l'élément de verrouillage est un tenon de verrouillage (76) amovible, qui peut être enfiché à travers un orifice (82) correspondant, ménagé dans le boulon (64).

7. Système de fixation selon la revendication 5 ou 6, **caractérisé en ce que** la trajectoire de mouvement axiale de l'élément de verrouillage est limitée dans la position montée.

8. Système de fixation selon la revendication 7, **caractérisé en ce que** la trajectoire de mouvement axiale de l'élément de verrouillage est limitée par le bord d'un évidement (84), ménagé dans un élément, en particulier une douille (74) sur laquelle l'élément de verrouillage (76) est en appui.

9. Système de fixation selon l'une quelconque des revendications 1 à 4, **caractérisé en ce que** l'élément de verrouillage comporte un élément, qui est assemblé avec le boulon (64') et qui, dans la position de déblocage, peut être détaché ou verrouillé par une rotation du boulon (64').

10. Système de fixation selon la revendication 9, **caractérisé en ce que** l'élément assemblé avec le boulon (64') est un tenon de verrouillage (76') qui, dans une première position de rotation du boulon, peut être enfiché à travers les trous (62, 78) et une première rainure dans un évidement (84') et, dans une deuxième position de rotation du boulon, tournée par rapport à la première position de rotation, est immobilisé dans une deuxième rainure dans l'évidement (84').

11. Rotor de hachage (44) pour un hache-paille (42), comportant un rotor (44) et des lames batteuses (46), qui sont fixées sur le rotor (44) au moyen d'un système de fixation selon l'une quelconque des revendications précédentes.
